Europäisches Patentamt

(19) European Patent Office

Office européen des brevets

(11) Veröffentlichungsnummer: **0 185 308**
**B1**

(12) **EUROPÄISCHE PATENTSCHRIFT**

(45) Veröffentlichungstag der Patentschrift:
25.01.89

(21) Anmeldenummer: **85115792.5**

(22) Anmeldetag: **11.12.85**

(51) Int. Cl.⁴: **F 02 M 45/04,** F 02 M 45/12

(54) Brennstoffeinspritzsystem.

(30) Priorität: **15.12.84 DE 3445825**

(43) Veröffentlichungstag der Anmeldung:
**25.06.86 Patentblatt 86/26**

(45) Bekanntmachung des Hinweises auf die Patenterteilung:
**25.01.89 Patentblatt 89/4**

(84) Benannte Vertragsstaaten:
**AT DE FR GB IT NL**

(56) Entgegenhaltungen:
**DE-A-1 476 247**
**FR-A-960 760**
**FR-A-2 193 421**
**GB-A-401 879**
**US-A-4 165 838**

(73) Patentinhaber: **Klöckner- Humboldt- Deutz
Aktiengesellschaft, Deutz- Mülheimer- Strasse
111 Postfach 80 05 09, D-5000 Köln 80 (DE)**

(72) Erfinder: **Küpper, Heinz, Am Driesch 6, D-5210
Troisdorf- Sieglar (DE)**

EP 0 185 308 B1

## Beschreibung

Die Erfindung bezieht sich auf ein Brennstoffeinspritzsystem zum Einspritzen von Brennstoff in den Brennraum einer Brennkraftmaschine, insbesondere einer nach dem Direkteinspritzverfahren arbeitenden Dieselmaschine, nach dem Oberbegriff des Anspruchs 1.

Bei nach dem Direkteinspritzverfahren arbeitenden Dieselmotoren besteht seit jeher die Problematik der geräuschvollen Verbrennung. Durch plötzliche Entzündung des eingespritzten Brennstoffes im Brennraum der Brennkraftmaschine wird ein rascher Druckanstieg verursacht, der das unter dem Begriff "Nageln" bekannte Geräusch erzeugt. Es ist schon vielfach versucht worden, dem Dieselmotor durch bestimmte Einspritzverläufe, wie beispielsweise durch eine langsam ansteigende Einspritzmenge, eine geräuscharme und gleichmäßige Verbrennung aufzuzwingen. Bei der Verwendung von zündunwilligen Brennstoffen, wie beispielsweise Methanol oder andere Alkohole, ist eine gleichmäßige und mit langsamem Druckanstieg arbeitende Verbrennung noch schwieriger zu erreichen. Durch die Verwendung von Glühkerzen, die den eingespritzten Brennstoff rechtzeitig entzünden, soll ein gleichmäßiger Druckanstieg während der Verbrennung erzielt werden. Derartige Glühzündungsquellen müssen zur sicheren Wirkung mit hohen Temperaturen betrieben werden, was deren Lebensdauer erheblich einschränkt. Da sie zusätzlich auch den heißen Verbrennungsgasen ausgesetzt sind, wird ihre Lebensdauer noch weiter vermindert.

Aus der US-A 4 165 838 ist eine Brennstoffeinspritzanlage bekannt, die bei einem nach dem Direkteinspritzverfahren arbeitenden Dieselmotor den Brennstoff in den Brennraum der Brennkraftmaschine derart einbringt, daß ein geräuscharmer Lauf erreicht wird. Dazu wird eine handelsübliche Einspritzpumpe mit einem besonders ausgestatteten Einspritzventil versehen. Dieses Einspritzventil arbeitet mit einer Drossel, die in der ersten Phase der Verbrennung den von der Einspritzpumpe zur Verfügung gestellten Einspritzdruck auf einen wesentlich niedrigeren Wert senkt. Durch ein in der Brennstoffzuführung angeordnetes und in Fließrichtung des Brennstoffs öffnendes Überdruckventil ist die Drossel abschaltbar. Die druckmäßig begrenzte Brennstoffmenge wird vor der eigentlichen Hauptbrennstoffmenge in den Brennraum eingespritzt und zündet dort. Die Einspritzung der Hauptbrennstoffmenge erfolgt dann direkt anschließend, wobei die Drossel umgangen werden, so daß der Brennstoff mit vollem Förderdruck eingespritzt werden kann.

Das bekannte Brennstoffenspritzsystem ist dabei so ausgelegt, das bei hoher Drehzahl der Brennkraftsmaschine das Überdruckventil ständig geöffnet und somit die Drossel wirkungslos geschaltet ist. Nach Überschreiten einer Grenzdrehzahl findet daher eine Voreinspritzung nicht mehr statt.

Der Erfindung liegt die Aufgabe zugrunde, ein Brennstoffeinspritzsystem gemäß dem Oberbegriff des Anspruchs 1 so weiterzubilden, daß bei einfachem Aufbau und hoher Funktionssicherheit auch nach Überschreiten der Grenzdrehzahl eine weiche und ruhige Verbrennung durch Voreinspritzung erzielbar ist.

Diese Aufgabe wird durch die kennzeichnenden Merkmale des Anspruchs 1 gelöst.

Der Druck und die Fördermenge des Brennstoffes wird durch eine bestimmte, gestufte Formgebung des Nockens der Nockenwelle der Einspritzpumpe derart vorgegeben, daß immer eine kleine Menge Brennstoff vor der Hauptmenge eingespritzt wird und dadurch die Zündung bzw. die weiche Verbrennung sichergestellt ist. Zeitlich gesehen wird durch den gestuften Nocken zuerst der Brennstoffdruck auf zumindest einen mittleren Wert gebracht, bei dem die Voreinspritzung abläuft, und nach einer kurzen Verharrungspause die gesamte Hauptbrennstoffmenge bei vollem Förderdruck in den Brennraum eingespritzt. Der Brennstoff wird dabei über die Drossel innerhalb der Brennstoffzuführung in das Einspritzventil geleitet, wobei die Drossel während der Voreinspritzung das Volumen auf einen konstanten Wert begrenzt. Wenn der Einspritzdruck auf seinen Maximalwert anzusteigen beginnt, kann nicht mehr der gesamte Brennstoff durch die Drossel an die Düsennadelspitze gelangen, und in der Zuführung zum Einspritzventil baut sich ein Druck bis zum Maximalwert des Druckes der Einspritzpumpe auf.

Gleichzeitig wächst die Druckdifferenz zwischen Ein- und Austritt der Drossel. Ab einem bestimmten Gtenzwert dieses Differenzdruckes öffnet ein Überdruckventil, und der Brennstoff kann von der Einspritzpumpe - ohne die Drossel passieren zu müssen - direkt auf die Düsennadel wirken, womit die Haupteinspritzung abläuft.

Durch dieses erfindungsgemäße Brennstoffeinspritzsystem wird auf einfache Weise ein ruhiger Lauf der Brennkraftmaschine erreicht. Zur Erzeugung des zunächst auf zumindest einen mittleren Wert ansteigenden, dann zumeist etwas abfallenden und schließlich auf den Höchstwert ansteigenden Brennstoffdruckes ist nur eine in den Erhebungskurven der Nocken geänderte, nämlich gestufte Nockenwelle der Einspritzpumpe notwendig. Diese Änderung läßt sich auf besonders einfache Weise, beispielsweise durch Schleifen, ohne zusätzliche Teile und daher preisgünstig durchführen. Die Drossel beschränkt die während der Voreinspritzung eingespritzte Brennstoffmenge über den gesamten Drehzahl- und Lastbereich der Brennkraftmaschine, so daß auch im Vollastbereich die gleiche geringfügige Menge Brennstoff zur Voreinspritzung gelangt. Im gesamten Betriebskennfeld der Brennkraftmaschine bleibt so während der Voreinspritzung die Einspritzrate pro Grad Kurbelwinkel konstant klein. Erst mit dem Einsatz der Haupteinspritzung wird das Überdruckventil geöffnet, und der Brennstoff kann ungehindert zur Düsennadel vordringen. Bei der Verwendung von zündunwilligen Brennstoffen, wie beispielsweise Methanol, ist das erfindungsgemäße Brennstoffeinspritzsystem in vorteilhafter Weise in der Lage, durch die Voreinspritzung die notwendige Glühkerzentemperatur um bis zum 100° und mehr abzusenken. Einen Teil der zur Entzündung des zündunwilligen Brennstoffes notwendigen Energie liefert in diesem Fall die Verbrennung des voreingespritzten Brennstoffes. Die Lebensdauer der verwendeten Glühkerze wird so erheblich gesteigert.

In einer vorteilhaften Ausgestaltung der Erfindung öffnet das Überdruckventil in einem Druckbereich von 60 bis 100 bar des anstehenden Differenzdruckes an der Drossel, wobei sich insbesondere ein Druck von 70 bar als zweckmäßig erwiesen hat. Unterhalb dieses Differenzdruckwerts fördert die Einspritzpumpe den Brennstoff durch die Drossel bis zur Düsennadel. Während der Voreinspritzung baut sich zunächst vor der Drossel ein mittlerer oder nahezu der maximale Brennstoffdruck auf und wird von der Drossel bei Förderung auf einen etwas geringeren Wert im Einspritzventil gedrosselt. Die kleine Brennstoffmenge der Voreinspritzung passiert die Drossel und hebt mit ihrem um die Drosselwirkung verminderten Druckwert die Düsennadel gerade eben an. Die Voreinspritzung läuft ab. Da trotzdem der fast vollständige Brennstoffdruck anliegt, wird eine gute Zerstäubung des Brennstoffs sicher erreicht. Bei der Haupteinspritzung kann nicht der gesamte Brennstoff durch die Drossel gelangen, so daß sich zwischen dem Ein- und Auslaß der Drossel ein Differenzdruck aufbaut. Ab einem bestimmten Wert dieses Differenzdruckes, vorzugsweise bei 70 bar, öffnet das Überdruckventil, und der Förderdruck kann vollständig auf die Düsennadel wirken. Zweckmäßig ist hierbei ein maximaler Förderdruck von 250 bar. Der Hub der Düsennadel während der Voreinspritzung stellt sich in einer weiteren vorteilhaften Ausbildung der Erfindung bei etwa 10 % des Wertes der Haupteinspritzung ein.

Weitere Merkmale und Vorteile der Erfindung ergeben sich aus den weiteren Ansprüchen, der nachfolgenden Beschreibung und der Zeichnung, die ein Ausführungsbeispiel der Erfindung schematisch darstellt. Es zeigt:

Fig. 1 eine schematische Darstellung des erfindungsgemäßen Brennstoffeinspritzsystems;

Fig. 2 einen Querschnitt durch eine erfindungsgemäße Nockenwelle der Einspritzpumpe in Höhe eines Nockens;

Fig. 3 einen Längsschnitt durch ein erfindungsgemäßes Einspritzventil mit einem Überdruckventil und einer Drossel.

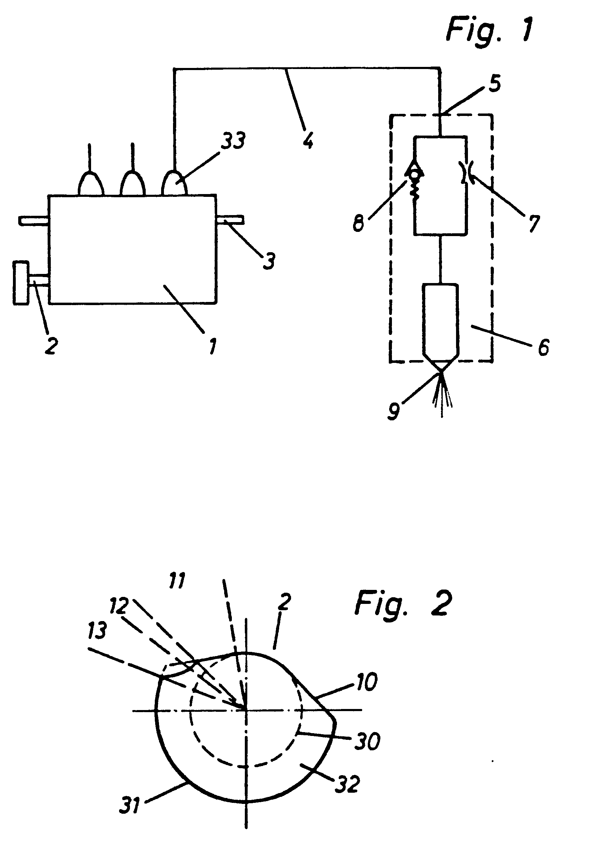

Eine nicht gezeigte Brennkraftmaschine, die nach dem Direkteinspritzverfahren für Dieselmotoren arbeitet, ist mit einer Einspritzpumpe 1 versehen. Die Einspritzpumpe 1 weist eine angetriebene Nockenwelle 2 und eine die Brennstoffmenge steuernde Regelstange 3 auf. Die Nockenwelle 2 treibt Pumpenstößel zur Förderung des Brennstoffes an. Ein Pumpenzylinder der Einspritzpumpe 1 ist über ein Gleichdruckentlastungsventil 33 und über eine Leitung 4 mit der Brennstoffzuführung 5 eines Einspritzventils 6 verbunden. Unmittelbar hinter der Brennstoffzuführung 5 sind in dem Einspritzventil 6 eine Drossel 7 und ein in Strömungsrichtung des Brennstoffes öffnendes Überdruckventil 8 parallel zueinander angeordnet. Sowohl die Drossel 7 als auch das Überdruckventil 8 können auch in räumlicher Entfernung zum Einspritzventil 6 angeordnet sein. Um jedoch die Kompressibilitätseinflüsse des Brennstoffes möglichst klein zu halten, ist eine Anordnung möglichst nahe am Einspritzort vorteilhaft. In Strömungsrichtung des Brennstoffes hinter der Drossel 7 und dem Überdruckventil 8 sind Leitungen für den Brennstoff zu einer Austrittsöffnung 9 des Einspritzventils 6 vorgesehen, durch die der Brennstoff in den Brennraum der Brennkraftmaschine eintritt (Fig. 1).

Fig. 2 zeigt einen Querschnitt der Nockenwelle 2 der Einspritzpumpe 1, wobei die Nockenkontur 10 eines Nockens 32 dargestellt ist. Diese Nockenkontur 10 ist während der Erhebungskurve in drei Abschnitte 11, 12, 13 aufgeteilt. Der erste Abschnitt 11 geht von dem Grundkreis 30 der Nockenkontur 10 aus und führt bis zu einem Anfangshub, bei dem die Einspritzung des Brennstoffes in den Brennraum gerade begonnen hat. Der nächste, zweite Abschnitt 12 weist keine weitere Hubsteigerung auf, sondern verläuft nahezu auf einem Kreisbogen um den Mittelpunkt der Nockenwelle 2. In manchen Fällen kann es zweckmäßig sein, daß in diesem zweiten Abschnitt 12 eine leichte Steigung der Erhebungskurve realsisiert wird, so daß die Einspritzung kontinuierlich fortgeführt wird, jedoch der Druck des Brennstoffes nicht weiter zunimmt. In einem dritten Abschnitt 13 wird die Erhebungskurve zügig auf ihren Maximalwert 31 angehoben, wobei in diesem Abschnitt 13 der Hauptteil der Einspritzung abläuft. Die Steigung der Erhebungskurve in dem ersten Abschnitt 11 ist tangentenförmig zum Grundkreis ausgebildet. Die Erhebungskurve im dritten Abschnitt 13 ist zu derjenigen im ersten Abschnitt 11 parallel verschoben und entspricht somit einer Tangente an einem kleineren Grundkreis.

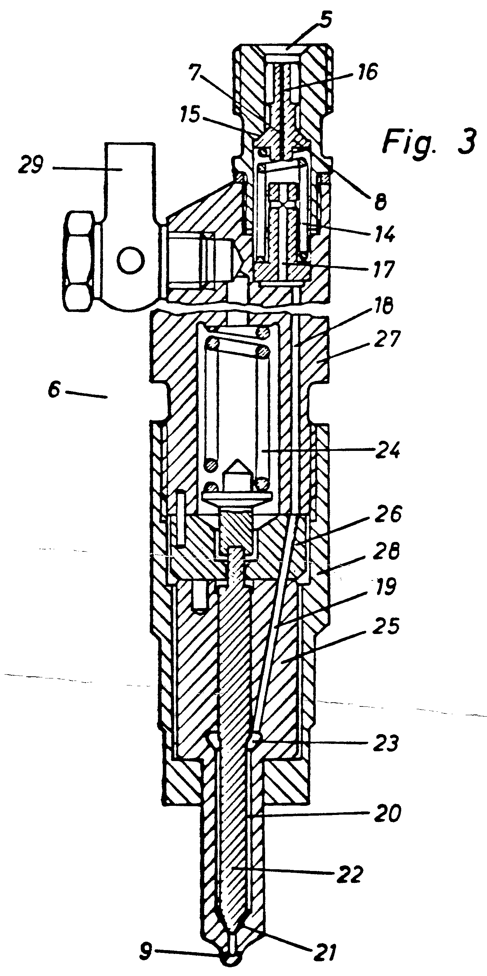

Fig. 3 zeigt das erfindungsgemäße Einspritzventil 6, das am oberen Ende eine Brennstoffzuführung 5 für die Zuführung des Brennstoffs von der Einspritzpumpe 1 aufweist.

Direkt unterhalb der Brennstoffzuführung 5 ist das Überdruckventil 8 mit einer Feder 14 und einem dichtenden Konus 15 eingefügt. Zentrisch in dem Überdruckventil 8 ist eine Bohrung 16 angeordnet, die als Drossel 7 wirkt. Es kann auch zweckmäßig sein, die Drossel 7 getrennt von dem Überdruckventil 8 als separate Bohrung vorzusehen. Der Brennstoff wird über Kanäle 17, 18, 19 und 20 bis zum Düsennadelsitz 21 einer Düsennadel 22 an Austrittsöffnungen 9 geführt. Die Düsennadel 22 weist eine Druckschulter 23 auf, auf die der Brennstoffdruck entgegen der Kraft einer Feder 24 wirkt. Die Düsennadel 22 ist dabei druckdicht in einem Düseneinsatz 25 eingesetzt, der wiederum über ein Zwischenstück 26 mit einer Hülse 28 an einen Ventilkörper 27 geschraubt ist. Durch einen Lecköllanschluß 29 kann evtl. austretendes Lecköl abgeführt werden.

Bei dem erfindungsgemäßen Brennstoffeinspritzsystem betätigt die Nockenwelle 2 der Einspritzpumpe 1 durch den Nocken 10 einen Pumpenstößel. Die Nockenwelle 2 dreht sich dabei in der in Fig. 2 gezeigten Lage im Uhrzeigersinn. Der Pumpenstößel wandert zunächst auf dem Grundkreisdurchmesser des Nockens 10 und gelangt so auf den ersten Abschnitt 11 der Erhebungskurve. In diesem ersten Abschnitt 11 steigt die Nockenerhebung tangentenförmig an. Der Brennstoffdruck beginnt somit, kontinuierlich anzusteigen und wirkt über die Drossel 7 auf die Düsennadel 22. Bei einem bestimmten, zumindest mittleren Wert des Druckes beginnt die Düsennadel 22 zu öffnen, und der Brennstoff wird eingespritzt. Die Drossel 7 begrenzt dabei die Menge des Brennstoffs, wobei an der Drossel 7 eine Druckdifferenz entsteht. Durch diese geringe Brennstoffmenge und die kurze Zeitdauer wird die Düsennadel nur geringfügig angehoben, so daß eine gute Zerstäubung erreicht wird. Die Drossel 7 bewirkt ferner, daß die voreingespritzte Brennstoffmenge über das gesamte Betriebskennfeld der Brennkraftmaschine weitgehend konstant bleibt. In dem zweiten Abschnitt 12 der Erhebungskurve bleibt der erreichte Hub zunächst über einen Bereich von vorzugsweise 15 bis 20° Kurbelwinkel der Brennkraftmaschine konstant. Dadurch bricht die Voreinspritzung wieder zusammen. In manchen Fällen kann es jedoch auch zweckmäßig sein, in den Bereich 12 die Nockenkontur 10 mit einer leichten Steigung zu versehen, so daß der Druck im Brennstoff nicht weiter anwächst, jedoch die Brennstofförderung nicht unterbrochen wird. Am Ende des zweiten Abschnitts 12 beginnt der dritte Abschnitt 13 der Erhebungskurve, in dem der Hub auf den maximalen Wert 31 der Erhebungskurve gesteigert wird. In diesem Bereich findet die Haupteinspritzung des Brennstoffes in den Brennraum statt. Die Steigung der Nockenkontur 10 ist gleich der im ersten Abschnitt 11 gewählt. Zur Erzielung eines schneller anwachsenden Druckes kann es auch zweckdienlich sein, daß die Steigung im dritten Abschnitt 13 stärker ausgebildet ist als im ersten Abschnitt 11. Der Druck des Brennstoffs steigt während des Durchlaufens des dritten Abschnitts 13 schnell auf den Maximalwert an, und es beginnt sich an der Drossel 7 eine Druckdifferenz aufzubauen, da nicht die gesamte Brennstoffmenge die Drossel 7 passieren kann. Ab dem Grenzwert des Überdruckventils 8, der vorzugsweise bei 70 bar Differenzdruck liegt, öffnet dieses und der volle, ungedrosselte Brennstoffdruck kann auf die Düsennadel 22 wirken. Die Düsennadel 22 öffnet jetzt vollständig, wobei die Haupteinspritzung der Brennkraftmaschine erfolgt.

Das in der Brennstoffleitung zum Einspritzventil 6 angeordnete Gleichdruckentlastungsventil 33 ersetzt das übliche Gleichraumentlastungsventil und stellt sicher, da stets zu Anfang eines Einspritzvorganges ein genau definierter Entlastungsdruck in der Leitung 4 und im Einspritzventil 6 selbst herrscht. Für manche Anwendungsfälle kann jedoch auch ein Gleichraumentlastungsventil genügen, wenn weitgehend vollständig druckentlastet wird.

Bei hohen Drehzahlen der Brennkraftmaschine steigt infolge dynamischer Effekte die Voreinspritzmenge des Brennstoffs vor der Drossel 7 in der Brennstoffzuführung 5 an. Durch die Drossel 7 wird in vorteilhafter Weise erreicht, daß bei niedrigen und hohen Drehzahlen der Brennkraftmaschine stets nur eine konstant gleiche, kleine Menge Brennstoff zur Voreinspritzung in den Brennraum gelangt, wodurch die Einspritzrate pro Grad Kurbelwinkel konstant klein bleibt. Während der Haupteinspritzung wird die Drossel 7 durch das Überdruckventil 8 überbrückt, so daß unabhängig von der Drehzahl oder der Last der direkte, ungedrosselte Weg zur Austrittsöffnung 9 frei ist. Durch diesen über die Zeit variierten Druckverlauf des Brennstoffdruckes wird sicher erreicht, daß eine Voreinspritzung mit weitgehend konstanter Brennstoffmenge und bei annähernd konstantem Druck stattfindet, wodurch der während der Haupteinspritzung eingebrachte Brennstoff stets optimale Zündbedingungen vorfindet, der Zündverzug verkleinert wird und letztendlich der Lauf der Brennkraftmaschine gleichmäßig und ruhig wird. Bei Brennkraftmaschinen mit einer Glühzündungsquelle, wie dies beispielsweise Brennkraftmaschinen aufweisen, die mit Methanol betrieben werden, wird durch eine derartige Voreinspritzung die Temperatur der Glühzündungsquelle um ca. 100° C herabgesetzt, wodurch sich deren Lebensdauer in vorteilhafter Weise verlängert. Auch wird durch eine derartige Voreinspritzung in vorteilhafter Weise die Schadstoffemission, insbesondere das $NO_x$, verringert.

## Patentansprüche

1. Brennstoffeinspritzsystem zum Einspritzen von Brennstoff in den Brennraum einer Brennkraftmaschine, insbesondere einer nach dem Direkteinspritzverfahren arbeitenden Dieselmaschine, bestehend aus einer von der Brennkraftmaschine angetriebenen Einspritzpumpe (1) mit einer Nockenwelle (2) und zumindest einem der Einspritzpumpe (1) zugeordneten Einspritzventil (6) mit einer axial geführten Düsennadel (22), in dessen Brennstoffzuführung (5) eine Drossel (7) angeordnet ist, die durch ein in der Brennstoffzuführung (5) angeordnetes und in Fließrichtung des Brennstoffes öffnendes Überdruckventil (8) abschaltbar ist, wobei am Beginn des Einspritzvorganges an der Düsennadel (22) ein verminderter Wert des maximalen Förderdruckes der Einspritzpumpe (1) ansteht und die Düsennadel (22) anhebt, dadurch gekennzeichnet, daß die Nockenwelle (2) mit zumindest einem Nocken (32) mit in zumindest drei Abschnitte (11, 12, 13) der Nockenerhebung aufgeteilter, gestufter Erhebungskurve versehen ist, wodurch der verminderte Wert des Förderdruckes erreichbar ist, und in einem ersten Abschnitt (11) die Nockenerhebung tangentenförmig bis zu einem ersten, gerade den Beginn der Einspritzung erreichenden Wert ansteigend ausgebildet ist, in einem darauffolgenden zweiten Abschnitt (12) dieser erste Wert der Nockenerhebung über einen konstanten Winkelbereich der Erhebungskurve des Nockens (32) konstant oder nur wenig ansteigend ausgebildet ist und in einem darauffolgenden dritten Abschniht (13) die Nockenerhebung tangentenförmig bis zum maximalen Wert (31) ansteigend ausgebildet ist und die Steigung der tangentenförmigen Nockenerhebung im ersten und dritten Abschnitt (11, 13) etwa gleich ausgebildet ist.

2. Brennstoffeinspritzsystem nach Anspruch 1, dadurch gekennzeichnet, daß der zweite Abschnitt (12) sich über einen Winkelbereich von 15 bis 20° Kurbelwinkel der Brennkraftmaschine erstreckt.

3. Brennstoffeinspritzsystem nach Anspruch 1 oder 2, dadurch gekennzeichnet, daß im Vollastbereich der Brennkraftmaschine der Hub der Düsennadel (22) zu Beginn der Einspritzung in etwa 10 % des Wertes am Ende der Einspritzung beträgt.

4. Brennstoffeinspritzsystem nach einem der Ansprüche 1 bis 3, dadurch gekennzeichnet, daß die Einspritzpumpe (1) mit einem Gleichdruckentlastungsventil (33) versehen ist, das zumindest die Leitung (4) von der Einspritzpumpe (1) zum Einspritzventil (6) nach jedem Einspritzvorgang auf einen vorgebbaren Druckwert entlastet.

5. Brennstoffeinspritzsystem nach einem der Ansprüche 1 bis 4, dadurch gekennzeichnet, daß das Überdruckventil (8) bei einer Druckdifferenz von etwa 60 bis 100 bar öffnet.

6. Verwendung eines Brennstoffeinspritzsystems nach Anspruch 1 bei einer mit zündunwilligen Brennstoffen betriebenen Diesel-Brennkraftmaschine mit einer Glühzündungsquelle, die nach dem Direkteinspritzverfahren arbeitet, zur Herabsetzung der maximalen Temperatur der Glühzündungsquelle.

**Claims**

1. A fuel injection system for injecting fuel into a combustion chamber of an internal combustion engine, especially of a diesel engine operable by the direct fuel injection method, the system comprising an injection pump (1) arranged to be driven by the internal combustion engine and fitted with a cam spindle (2), and comprising at least one injection valve (6) associated with the pump (1) and having an axially arranged nozzle needle (22), in which a choke (7) disposed in the valve's fuel inlet (5) is disconnectable by a highpressure relief valve (8) also disposed in the fuel inlet (5) and arranged to open in the fuel's direction of flow, and in which a reduced value of the pump's (1) maximum feed pressure prevails, at the start of the injection operation, at the nozzle needle (22) and by means of which the needle (22) is lifted, characterized in that the cam spindle (2) is provided with at least one cam (32), the curve of the cam lobe of which is, due to being divided into at least three sections (11, 12, 13), a stepped one thus rendering it possible to obtain the reduced value of the feed pressure, that the first section (11) of the cam lobe is constructed to rise tangent-like to a first value obtainable just when the injection starts, that the subsequent second section (12) is constructed so that this first value of the cam lobe either remains constant or rises only slightly across a constant angular range, that the cam lobe's subsequent third section (13) is constructed to rise tangent-like to the maximum value (31), and in that the gradient of the tangent-like lobe in the first and third sections (11, 13) is substantially the same.

2. A fuel injection system according to claim 1, characterized in that the second section (12) extends through an angular range of between 15 and 20° of the engine's crank angle.

3. A fuel injection system according to claim 1 or claim 2, characterized in that, if the internal combustion engine is operated at full-load speed, the nozzle needle (22) is lifted at the start of the injection to an extent which is substantially 10 % of that at the termination of the injection.

4. A fuel injection system according to any of the claims 1 to 3, characterized in that the injection pump (1) is provided with a constant-pressure relief valve (33) serving to relieve the pressure, after each injection, in at least the duct (4) between the pump (1) and the valve (6) to a predeterminable value.

5. A fuel injection system according to any of the claims 1 to 4, characterized in that the highpressure relief valve (8) is arranged to open at a pressure difference of substantially between 60 and 100 bar.

6. Utilization of a fuel injection system, as claimed in claim 1, in a diesel engine operable by the direct fuel injection method with ignition-resistant fuels and being equipped with hot-spot-ignition means, wherein the system serves to reduce the maximum temperature of the autoignition means.

**Revendications**

1, Système d'injection de combustible pour injecter du combustible dans la chambre de combustion d'un moteur à combustion interne, notamment d'un moteur Diesel fonctionnant d'après le procédé d'injection directe, système comportant une pompe d'injection (1) actionnée par le moteur à combustion interne et pourvue d'un arbre à cames (2), et au moins une soupape d'injection (6) associée à la pompe d'injection (1) et pourvue d'un pointeau d'injecteur (22) guidé axialement, et dans l'entrée (5) de combustible de laquelle est disposé un étranglement (7), qui peut être mis hors circuit par une soupape de surpression (8) montée dans l'entrée (5) de combustible et s'ouvrant dans le sens de l'écoulement du combustible, une valeur amoindrie de la pression de refoulement maximale de la pompe d'injection (1) étant appliquée sur le pointeau d'injecteur (22) au début du processus d'injection et ayant alors pour effet de relever ce pointeau d'injecteur (22), système d'injection de combustible caractérisé en ce que l'arbre à cames (2) est pourvu d'au moins une came (32) présentant une courbe d'élévation étagée, divisée en au moins trois tronçons (11, 12, 13) d'élévation de came, ce qui permet d'obtenir la valeur réduite de la pression de refoulement, et, dans un premier tronçon (11) l'élévation de la came est realisée ascendante en forme de tangente jusqu'à une première valeur s'obtenant juste au début de l'injection, dans un deuxième tronçon (12) qui suit, cette première valeur de l'élévation de la came est maintenue constante, ou seulement légèrement ascendante, sur une zone angulaire constante de la courbe d'élévation de la came (32), et dans un troisième tronçon (13) qui suit, l'élévation de la came est réalisée ascendante, en forme de tangente, jusqu'à la valeur maximale (31), et la pente ascendante de l'élévation, en forme de tangente, de la came est prévue à peu près la même dans le premier et le troisième tronçons (11, 13).

2. Système d'injection de combustible selon la revendication 1, caractérisé en ce que le deuxième tronçon (12) s'étend sur une zone angulaire de 15 à 20° de l'angle du vilebrequin du moteur à combustion interne.

3. Système d'injection de combustible selon la revendication 1 ou 2, caractérisé en ce que dans le régime à pleine charge du moteur à combustion interne, la course du pointeau (22) de l'injecteur, au début de l'injection, est d'à peu près 10 % de sa valeur à la fin de l'injection.

4. Système d'injection de combustible selon l'une des revendications 1 à 3, caractérisé en ce que la pompe d'injection (1) est pourvue d'une soupape (33) de décharge à pression constante, qui, après chaque processus d'injection, décharge au moins la conduite (4), menant de la pompe d'injection (1) à la soupape d'injection (6), à une valeur de pression pouvant être prédéterminée.

5. Système d'injection de combustible selon l'une des revendications 1 à 4, caractérisé en ce que la soupape de surpression (8) s'ouvre lors d'une différence de pression d'à peu près 60 à 100 bars.

6. Application d'un système d'injection de combustible selon la revendication 1 à un moteur à combustion interne Diesel fonctionnant avec des combustibles faciles à s'enflammer et pourvu d'une source d'allumage par incandescence, qui fonctionne d'après le procédé d'injection directe, en vue d'abaisser la température maximale de la source d'allumage par incandescence.

Fig. 1

Fig. 2

Fig. 3